**Europäisches Patentamt**

**European Patent Office**

**Office européen des brevets**

(11) Veröffentlichungsnummer: **0 462 474 A2**

## (12) EUROPÄISCHE PATENTANMELDUNG

(21) Anmeldenummer: **91109412.6**

(22) Anmeldetag: **08.06.91**

(51) Int. Cl.⁵: **B32B 27/08, C08G 18/66, C08J 9/38**

(30) Priorität: **21.06.90 DE 4019800**

(43) Veröffentlichungstag der Anmeldung:
**27.12.91 Patentblatt 91/52**

(84) Benannte Vertragsstaaten:
**BE DE ES FR GB IT NL SE**

(71) Anmelder: **BAYER AG**

**W-5090 Leverkusen 1 Bayerwerk(DE)**

(72) Erfinder: **Wagner, Joachim, Dr.**
**Semmelweisstrasse 135**
**W-5000 Köln 80(DE)**
Erfinder: **Rasshofer, Werner, Dr.**
**Leopold-Gmelin-Strasse 31**
**W-5000 Köln 80(DE)**
Erfinder: **Elsner, Thomas, Dr.**
**Südallee 70**
**W-4000 Düsseldorf 13(DE)**

(54) **Verfahren zur Herstellung von Formkörpern oder Folien.**

(57) Ein Verfahren zur Herstellung von Formkörpern oder Folien, bei welchem man Kombinationen aus

A) in zerkleinerter Form vorliegenden Polyisocyanat-Polyadditionsprodukten einer Dichte von 0,1 bis 1,2 g/cm³ oder in zerkleinerter Form vorliegenden Kombinationen aus derartigen geschäumten Polyisocyanat-Polyadditionsprodukten mit Folienmaterial,

B) Verstärkungsstoffen in einer Menge von bis zu 80 Gew.-%, bezogen auf das Gesamtgewicht des Systems und gegebenenfalls

C) weiteren Hilfs- und Zusatzstoffen

unter erhöhten Temperatur- und Druckbedingungen unter irreversibler Erhöhung der Dichte des geschäumten Polyisocyanat-Polyadditionsprodukts einer thermoplastischen Formgebung unterwirft und die so erhaltenen Formkörper oder Folien.

EP 0 462 474 A2

Die vorliegende Erfindung betrifft ein Verfahren zur Herstellung von verstärkten Formkörpern oder von Folien auf Basis von Urethangruppen und/oder Harnstoffgruppen aufweisenden, geschäumten Polyisocyanat-Polyadditionsprodukten durch thermoplastische Formgebung, wobei als Polyisocyanat-Polyadditionsprodukte zerkleinerte geschäumte Materialien A) in Kombination mit bestimmten Verstärkerstoffen B) zum Einsatz gelangen, und wobei die Dichte der geschäumten Materialien während der thermoplastischen Formgebung erhöht wird, und die so erhaltenen Formkörper.

Es ist bereits bekannt, Formkörper oder Flächengebilde durch thermoplastische Verformung von Polyurethanen herzustellen (vgl. z.B. Becker/Braun, Kunststoffhandbuch, Band 7, "Polyurethane", Carl Hanser Verlag, München/Wien (1983), Seiten 428 ff.). Bei den ersten bekannt gewordenen, thermoplastisch verarbeitbaren Polyurethanelastomeren handelt es sich um solche auf Basis von Diisocyanaten, höhermolekularen Dihydroxyverbindungen, insbesondere höhermolekularen Polyesterdiolen und niedermolekularen Diolen als Kettenverlängerungsmittel, wobei die Polyurethane möglichst linear aufgebaut, d.h. keine Vernetzungs- bzw. Verzweigungsstellen im Molekül aufweisen sollten, Auch die thermoplastische Verformung von Polyurethanen mit verzweigter Molekülstruktur ist bereits bekannt, So wird beispielsweise in DE-OS 2 461 399, DE-OS 2 164 381, DE-OS 2 032 174 und DE-OS 2 607 380 die Herstellung und thermoplastische Verformung von Polyurethanschaumstoffen beschrieben, Die DE-OS 3 733 756 befaßt sich ihrerseits mit der Herstellung von Formkörpern oder Folien auf Basis von Polyisocyanat-Polyadditionsprodukten einer Dichte von mindestens 0,8 g/cm$^3$, wobei als Polyisocyanat-Polyadditionsprodukte Elastomere verwendet werden, bei deren Herstellung Verbindungen des Molekulargewichtsbereichs 1800 bis 12 000 mit gegenüber Isocyanatgruppen reaktionsfähigen Gruppen und einer Funktionalität im Sinne der Isocyanat-Additionsreaktion von mindestens 2,5 zusammen mit niedermolekularen, vorzugsweise difunktionellen Verbindungen mit gegenüber Isocyanatgruppen reaktionsfähigen Gruppen als Reaktionspartner für die Polyisocyanate zur Anwendung gelangen. Gemäß der Lehre der DE-OS 3 733 756 können die thermoplastisch zu verarbeitenden Polyisocyanat-Polyadditionsprodukte auch Füll-und Verstärkungsstoffe enthalten.

Aufgabe der vorliegenden Erfindung war es, ein Verfahren zur Verfügung zu stellen, bei dem aus geschäumten PUR-Teilen wie z.B. Abfall, Austrieb, überstehende Verschnitte oder Altteile mit der Absicht der Materialwiederwendung neue Formartikel mit einem für viele Zwecke ausreichenden Eigenschaftbild zur Verfügung zu stellen. Es war insbesondere die der Erfindung zugrundeliegende Augabe, ein Verfahren zur Verfügung zu stellen, welches eine sinnvolle Wiederverwendung von Verbundartikeln aus PUR-Hinterfüllschaum und Folienmaterialien, beispielsweise PVC-Folien, wie sie beispielsweise im Automobilbau zur Herstellung von Armaturentafeln verwendet werden, gestattet.

Jetzt wurde überraschend gefunden, daß hochwertige Formkörper und Folien auf Basis von Polyisocyanat-Polyadditionsprodukten nach einer Verfahrensvariante zugänglich sind, bei welcher ein geschäumtes, in zerkleinerter Form vorliegendes Polyisocyanat-Polyadditionsprodukt einer bestimmten chemischen Zusammensetzung, gegebenenfalls in Kombination mit einem ebenfalls in zerkleinerter Form vorliegenden Folienmaterial, mit bestimmten Verstärkungsstoffen kombiniert wird, worauf sich die thermoplastische Formgebung dieser Kombination unter gleichzeitiger irreversibler Kompression unter Dichteerhöhung anschließt. Bei der erfindungsgemäßen "thermoplastischen" Formgebung kommt es jedoch nicht zu einem Aufschmelzen des Polyisocyanat-Polyadditionsprodukts, wie es von im eigentlichen Sinne "thermoplastischen" Kunststoffen bekannt ist; eine flüssige, relativ niedrigviskose, makroskopische Phase wird zu keinem Zeitpunkt eingenommen. Demzufolge ist unter "thermoplastischer Formgebung" lediglich eine bei erhöhter Temperatur stattfindende Verformung zu verstehen, bei welcher das Polyisocyanat-Polyadditionsprodukt allenfalls erweicht, keineswegs jedoch verflüssigt wird.

Gegenstand der Erfindung ist ein Verfahren zur Herstellung von Formkörpern oder Folien, dadurch gekennzeichnet, daß man Kombinationen aus

A) einer Komponente A) bestehend aus

A1) in zerkleinerter Form vorliegenden, geschäumten Polyisocyanat-Polyadditionsprodukten einer Dichte von 0,1 bis 1,2 g/cm$^3$, die durch Umsetzung von

a) organischen Polyisocyanaten mit

b) Verbindungen mit einem Molekulargewicht von 1.800 bis 12.000, welche im statistischen Mittel mindestens 2,5, gegenüber Isocyanatgruppen reaktionsfähige Gruppen aufweisen und gegebenenfalls

c) Diaminen mit zwei primären und/oder sekundären aromatisch gebundenen Aminogruppen des Molekulargewichtsbereichs 108 bis 400 und/oder gegebenenfalls

d) Ethergruppen aufweisenden (Cyclo)-Alkandiolen und/oder (Cyclo)Alkanpolyaminen des Molekulargewichtsbereichs 60 bis 1.799 unter Mitverwendung von

e) Treibmitteln, sowie gegebenenfalls weiteren aus der Polyurethanchemie an sich bekannten Hilfs- und Zusatzmitteln unter Einhaltung einer Isocyanatkennzahl von 62 bis 200 im Ein- oder Mehrstufenverfahren hergestellt worden sind,

oder aus

A2) in zerkleinerter Form vorliegenden Kombinationen aus derartigen geschäumten Polyisocyanat-Polyadditionsprodukten mit Folienmaterial, wie sie durch Hinterschäumen einer Folie zu einem Schaumstoff-Folienverbund erhalten werden, wobei die Komponente A) in einer Menge von mindestens 20 Gew.-%, bezogen auf das Gesamtgewicht des Systems, vorliegt und

B) Verstärkungsstoffen in einer Menge von bis zu 80 Gew.-%, bezogen auf das Gesamtgewicht des Systems, und gegebenenfalls

C) weiteren Hilfs- und Zusatzstoffen in einer Menge von bis zu 50 Gew.-%, bezogen auf das Gesamtgewicht des Systems

unter erhöhten Temperatur- und Druckbedingungen unter irreversibler Erhöhung der Dichte der geschäumten Polyisocyanat-Polyadditionsprodukte einer thermoplastischen Formgebung unterwirft.

Gegenstand der Erfindung sind auch die nach dem erfindungsgemäßen Verfahren erhältlichen Formkörper und Folien.

Bei den beim erfindungsgemäßen Verfahren einzusetzenden Polyisocyanat-Polyadditonsprodukten A1) handelt es sich um geschäumte Kunststoffe des Dichtebereichs 0,1-1,2, vorzugsweise 0,1-1,0, besonders bevorzugt 0,1-0,79 g/cm$^3$. Besonders bevorzugt handelt es sich bei diesen Materialien um sehr weiche bis halbharte Schaumstoffe einer Härte von Shore D von maximal 50, vorzugsweise maximal 40. Die Schaumstoffe können bis zu 80 Gew.-%, besonders bevorzugt 20-60 Gew.-% an Füll- und/oder Verstärkungsstoffen enthalten. Bei den Polyisocyanat-Polyadditionsprodukten A1) handelt es sich um Schaumstoffe, deren Rohdichte maximal 90 %, vorzugsweise maximal 50 % der Dichte des entsprechenden porenfreien Materials entspricht.

Die Herstellung der Polyisocyanat-Polyadditionsprodukte A1) erfolgt durch an sich bekannte Umsetzung der bereits obengenannten Ausgangsmaterialien, wobei diese sowohl ein- als auch mehrstufig miteinander zur Reaktion gebracht werden können, und wobei die Umsetzung auch sowohl in geschlosssenen Formen, als auch durch freie Verschäumung der Ausgangsmaterialien erfolgen kann.

Geeignete Ausgangsmaterialien a) sind beliebige organische Polyisocyanate, vorzugsweise jedoch aromatische Polyisocyanate. In Betracht kommen beispielsweise die in EP-B-00 81 701, Kolonne 3, Zeile 30 bis Kolonne 4, Zeile 25 genannten Verbindungen. Besonders bevorzugt werden als Komponente a) Polyisocyanatgemische der Diphenylmethan-Reihe eingesetzt, wie sie in an sich bekannter Weise durch Phosgenierung von Anilin/Formaldehyd-Kondensaten zugänglich sind und die bei 23°C eine Viskosität von 50 bis 500 mPa.s aufweisen.

Bei der Komponente b) handelt es sich um Verbindungen mit gegenüber Isocyanatgruppen reaktionsfähigen Gruppen des Molekulargewichtsbereichs 1.800 bis 12.000, vorzugsweise 3.000 bis 7.000 oder um Gemische derartiger Verbindungen, wobei die Komponente b) im Sinne der Isocyanat-Additionsreaktion eine über 2,5 liegende (mittlere) Funktionalität aufweist. Vorzugsweise liegt die (mittlere) Funktionalität der Komponente b) bei 2,5 bis 3,0, insbesondere bei 2,8 bis 3,0. Besonders gut als Komponente b) geeignete Verbindungen sind, diesen Ausführungen entsprechende, Polyetherpolyole bzw. Gemische von Polyetherpolyolen wie sie in DE-AS 2 622 951, Kolonne 6, Zeile 65 - Kolonne 7, Zeile 47 offenbart sind, wobei auch erfindungsgemäß solche Polyetherpolyole bevorzugt sind, deren Hydroxylgruppen zumindest zu 50 %, vorzugsweise zumindest zu 80 % aus primären Hydroxylgruppen bestehen. Auch die in DE-AS 2 622 951 beispielhaft offenbarten, Hydroxylgruppen aufweisenden Polyester, Polythioether, Polyacetale, Polycarbonate oder Polyesteramide sind im Prinzip als erfindungsgemäße Komponente b) geeignet, sofern sie den obengemachten Ausführungen entsprechen, jedoch gegenüber den Polyetherpolyolen weniger bevorzugt. Auch die in DE-AS 2 622 951 erwähnten, durch Vinylpolymerisate modifzierten Polyetherpolyole oder hochmolekulare Polyaddukte bzw. Polykondensate enthaltenden Polyhydroxylverbindungen, die den obengemachten Angaben bezüglich der Funktionalität entsprechen, können vorteilhaft als Komponente b) oder als Teil der Komponente b) eingesetzt werden.

Als Ausgangskomponente b) ebenfalls geeignet sind, obigen Ausführungen entsprechende, Polyetheramine oder Gemische von Polyetheraminen, d.h. Polyether mit gegenüber Isocyanatgruppen reaktionsfähigen Gruppen, die sich zumindest zu 50 Äquivalent-%, vorzugsweise zumindest zu 80 Äquivalent-% aus primären und/oder sekundären, aromatisch oder aliphatisch, vorzugsweise aromatisch gebundenen Aminogruppen und zum Rest aus primären und/oder sekundären, aliphatisch gebundenen Hydroxylgruppen zusammensetzen. Geeignete derartige Aminopolyether sind beispielsweise die in EP-B-00 81 701, Kolonne 4, Zeile 26 bis Kolonne 5, Zeile 40 genannten Verbindungen. Die Aminogruppen in diesen Verbindungen können auch in geeigneter Form derivatisiert sein, z.B. als Ketimingruppen.

Als Komponente b) können selbstverständlich auch beliebige Gemische der beispielhaft genannten Polyhydroxylverbindungen mit den beispielhaft genannten Polyetheraminen verwendet werden.

Bei der gegebenenfalls mitzuverwendenden Komponente c) handelt es sich um aromatische Diamine der in EP-B-00 81 701, Kolonne 5, Zeile 58 bis Kolonne 6, Zeile 34 beispielhaft genannten Art, wobei auch erfindungsgemäß die dort als bevorzugt herausgestellten Diamine bevorzugt sind.

Bei den gegebenenfalls als weitere Aufbaukomponente d) mitzuwendenden Polyolen oder Polyaminen handelt es sich um beliebige nicht-aromatische Verbindungen mit zwei gegenüber Isocyanatgruppen reaktionsfähigen Gruppppen des Molekulargewichtsbereichs 60 bis 1.799, vorzugsweise 62 bis 500, insbesondere 62 bis 400. Ferner in Betracht kommen beispielsweise auch Ethergruppen aufweisende aliphatische Polyamine, beispielsweise endständige primäre Aminogruppen aufweisende Polypropylenoxide des genannten Molekulargewichtsbereichs. In Betracht kommen auch cycloaliphatische Ringe aufweisende Polyole wie beispielsweise 1,4-Dihydroxy-cyclohexan oder 1,4-Bishydroxymethyl-cyclohexan.

Es ist ein wesentlicher Punkt, daß bei der Herstellung der Schaumstoffe die Komponente b) in solcher Menge zur Anwendung gelangt, daß der Gewichtsanteil der Komponente b), bezogen auf das Gewicht der Komponenten a)-d) mindestens 5 Gew.-%, vorzugsweise mindestens 10 Gew.-% beträgt. Besonders bevorzugt werden die Polyisocyanat-Polyadditionsprodukte unter alleiniger Verwendung von Polyolen b) als Reaktionspartner für die Polyisocyanate hergestellt. Vorzugsweise, jedoch nicht zwingend, liegt die mittlere Funktionalität im Sinne der Isocyanat-Additionsreaktion aller Komponenten b)-d) bei mindestens 2,5.

Da es sich bei den Polyisocyanat-Polyadditionsprodukten A1) um Schaumstoffe handelt, müssen bei ihrer Herstellung zwingend an sich bekannte Treibmittel e), gegebenenfalls neben weiteren Hilfs- und Zusatzmitteln e) eingesetzt werden. In Betracht kommen sowohl chemische als auch physikalische Treibmittel oder auch in den Ausgangskomponenten gelöste inerte Gase. Geeignete Treibmittel sind beispielsweise in EP-B-00 81 701, Kolonne 8, Zeile 31 bis 51, bzw. in dem dort zitierten "Kunststoffhandbuch" so beschrieben. Bevorzugtes Treibmittel ist Wasser.

Die Herstellung der Polyisocyanat-Polyaddtionsprodukte A1) kann im übrigen unter Mitverwendung von Füll- und/oder Verstärkungsstoffen e) erfolgen, die, falls überhaupt, in Mengen von bis zu 80 Gew.-%, insbesondere von 20-60 Gew.-%, bezogen auf das Gewicht aller Ausgangskomponenten a)-e) mitverwendet werden können. Die Mitverwendung von Füll- und Verstärkungsstoffen ist allerdings nicht bevorzugt.

Geeignete Füll- und/oder Verstärkungsstoffe sind beispielsweise Bariumsulfat, Kieselgur, Schlämmkreide, Mica oder insbesondere Glasfasern, LC-Fasern, Glasflakes, Glaskugeln, Metall- oder Kohlefasern.

Unter Verstärkungsstoffen e), die bei der Herstellung der Polyisocyanat-Polyadditionsprodukte mitverwendet werden können, sollen auoh, gegebenenfalls Bohrungen oder Durchbrüche aufweisende Flächengebilde aus Holz, massivem, gegebenenfalls verstärkten Kunststoff oder Metall verstanden werden, wie sie beispielsweise bei der Herstellung von umschäumten Schalttafeln, Konsolen, Dachhimmeln oder Armaturenbrettern oder zur Herstellung sonstiger Innenverkleidungen im Fahrzeugbau zum Einsatz gelangen. Bei der anschließenden Zerkleinerung der derartigen Verstärkungsstoffen e) enthaltenden Polyisocyanat-Polyadditionsprodukte fallen dann naturgemäß entsprechende Klein- und Kleinstteile an, in denen diese Verstärkungsstoffe in entsprechend zerkleinerter Form vorliegen. Auch solche Klein- und Kleinstteile können mit dem erfindungsgemäßen Verfahren zu neuen Formkörpern verarbeitet werden.

Weitere, gegebenenfalls mitzuverwendende Hilfs- und Zusatzmittel e) sind beispielsweise die üblichen Katalysatoren für die Polyisocyanat-Polyadditionsreaktionen, oberflächenaktive Zusatzstoffe, Zellregler, Pigmente, Farbstoffe, Flammschutzmittel, Stabilisatoren, Weichmacher oder fungistatisch bzw. bakteriostatisch wirkende Substanzen, wie sie beispielsweise in EP-B-00 81 701, Kolonne 6, Zeile 40 bis Kolonne 9, Zeile 31 beispielhaft beschrieben sind.

Die Herstellung der Polyisocyanat-Polyadditionsprodukte A1) kann, wie bereits angedeutet, nach mehreren Varianten erfolgen. Vorzugsweise erfolgt sie jedoch nach dem Einstufen-Verfahren dergestalt, daß man die Polyisocyanatkomponente a) mit einem Gemisch der Komponenten b), c), d) und e) unter Verwendung geeigneter Mischapparaturen vermischt und zur Reaktion bringt. Grundsätzlich ist es auch möglich, die Polyisocyanat-Polyadditionsprodukte nach einem "modifizierten Einstufenverfahren" umzusetzen, gemäß welchem die Polyisocyanat-Komponente a) mit einem Teil der gegenüber Isocyanatgruppen reaktionsfähigen Verbindungen unter Bildung von NCO-Semiprepolymeren umsetzt, welche anschließend einstufig mit dem Gemisch aus den restlichen Komponenten mit gegenüber Isocynatgruppen reaktionsfähigen Gruppen zur Reaktion gebracht werden. Auch die Herstellung der Schaumstoffe nach dem klassischen Prepolymerverfahren ist prinzipiell denkbar. In allen Fällen liegt die NCO-Kennzahl (Anzahl der NCO-Gruppen dividiert durch die Anzahl an NCO-reaktiven Gruppen multipliziert mit 100) bei 60 bis 200, vorzugsweise bei 80 bis 180, insbesondere 95 bis 140. Die Hilfs- und Zusatzmittel e) werden im allgemeinen der Komponente b) bzw. dem Gemisch der Komponenten b)-d) vor der Durchmischung mit der Polyisocyanatkomponente a) einverleibt; es ist jedoch prinzipiell auch möglich, gewisse Hilfs-und Zusatzmittel der Polyisocyanatkomponente zuzusetzen, bevor diese mit den übrigen Ausgangsmaterialien vereinigt wird. Bei der Herstellung der Polyisocyanat-Polyadditionsprodukte nach dem Prepolymer-Verfahren werden die Hilfs- und Zusatzmittel vorzugsweise den NCO-Propolymeren zugesetzt.

Die Herstellung der Polyisocyanat-Polyadditionsprodukte A1) kann, wie beispielsweise in DE-AS 2 622 951, US-PS 4 218 543 oder EP-B-00 81 701 beschrieben, nach dem Verfahren der Reaktionsspritzgußtechnik in geschlossenen Formen erfolgen, jedoch ist es auch möglich, die Polyisocyanat-Polyadditionsprodukte in offenen Formen oder offen geschäumt als Blockware bzw. Schaumstoffplatten herzustellen.

Besonders bevorzugt handelt es sich bei der Komponente A) jedoch um A2) in verkleinerter Form vorliegende Kombinationen aus geschäumten Polyisocyanat-Polyadditionsprodukten der genannten Art mit Thermoplastfolien, wie sie in hinterschäumten Verbundsystemen vorliegen. Der Begriff "hinterschäumte Verbundsysteme" steht hierbei für Verbundsysteme aus Thermoplastfolien und weichem Polyurethanschaumstoff, wie sie beispielsweise zur Herstellung von Lenkrädern, Kopfstützen, Armaturentafeln, Fahrradsättel, Fahrzeughimmeln u. dgl. zum Einsatz gelangen. Geeignete Thermoplastfolien sind beispielsweise Folien aus Weich-PVC. Geeignet sind jedoch auch beliebige andere Thermoplastfolien, beispielsweise solche, die nach dem sogenannten "Slush-Verfahren" durch Tiefziehen oder aus geeigneten Ausgangsmaterialien in geschlossenen Folien-Formen hergestellt worden sind. Zu den letztgenannten gehören beispielsweise Polyurethanfolien, die vorzugsweise ohne Mitverwendung von Treibmitteln in geschlossenen Formen hergestellt worden sind, wobei als Ausgangsmaterialien solche verwendet werden, die den Ausgangsmaterialien a) bis d) zur Herstellung der erfindungsgemäß einzusetzenden Polyisocyanat-Polyadditionsprodukte weitgehend entsprechen. Bei den "Thermoplastfolien" kann es sich entweder um solche handeln, die auf klassischen thermoplastischen Kunststoffen basieren, d.h. die bei der thermoplastischen Formgebung verflüssigt werden oder auch um solche auf Basis von Kunststoffen der Art der erfindungsgemäß einzusetzenden Polyisocyanat-Polyadditionsprodukte, die bei der thermoplastischen Formgebung nicht verflüssigt werden, und für die der Begriff "thermoplastisch" die obengenannte Bedeutung hat.

Die Herstellung der Verbundsysteme A2) erfolgt in an sich bekannter Weise durch Auskleiden von geeigneten Formen mit einer Thermoplastfolie der genannten Art und anschließendes Befüllen der ausgekleideten Form mit dem zum Schaumstoff ausreagierenden Reaktionsgemisch. Derartige Verbundsysteme bestehen im allgemeinen zu 40 bis 70 Gew.-% aus Thermoplastfolie und zu 30 bis 60 Gew.-% aus Polyurethanschaumstoff.

Bei der Durchführung des erfindungsgemäßen Verfahrens unter Verwendung von Verbundsystemen A2) als Komponente A) dient das erfindungsgemäße Verfahren insbesondere der Wiederverwendung von derartigen Verbundsystemen, wie sie beispielsweise bei der Verschrottung von alten Kraft- und Unfallfahrzeugen oder bei der Herstellung und Verarbeitung von derartigen Verbundsystemen als Abfallprodukte anfallen.

Im Falle der Verwendung von geschäumten Polyisocyanat-Polyadditionsprodukten A1) als Komponente A) dient das erfindungsgemäße Verfahren beispielsweise der Wiederverwendung von Produktionsabfällen wie Angüssen, Austrieben oder abzuschneidenden Überständen, wie sie bei der Verarbeitung von Blockschaumstoffen anfallen.

Es ist jedoch wesentlich, daß die Polyisocyanat-Polyadditionsprodukte A1) bzw. deren Kombinationen A2) mit Thermoplastfolien in zerkleinerter Form, d.h. in Form von Granulaten, Schnipseln, Flocken und/oder anderen Klein-und Kleinstteilen zum Einsatz gelangen. Besonders bevorzugt werden die Polyisocyanat-Polyadditionsprodukte A1) bzw. ihre Kombinationen A2) mit Thermoplastfolien vor der Durchführung des erfindungsgemäßen Verfahrens in geeigneten Geräten zu Klein- und Kleinstteilen einer maximalen Teilchengröße von 10 mm, vorzugsweise von kleiner 6 mm zerkleinert. Geeignete Methoden zur Zerkleinerung sind z.B. Schneideverfahren, Reiß-, Häckseloder Granulierverfahren, wie sie dem Fachmann bekannt sind. Geeignete Apparaturen für die Zerkleinerung werden kommerziell angeboten. Gut geeignet sind beispielsweise Schneidemühlen mit rotierenden Messern und nachfolgender Siebung. Solche Vorrichtungen sind z.B. von der Firma Pallmann, 6660 Zweibrücken, BRD oder von der Firma Weiss, 6340 Dillenburg, BRD, erhältlich.

Bei der Komponente B) handelt es sich um Verstärkungs- bzw. Füllstoffe wie beispielsweise Bariumsulfat, Kieselgur, Schlämmkreide, Mica oder insbesondere Glasfasern, LC-Fasern, Glas-Flakes, Glaskugeln, Metall- oder Kohlefasern. Als Komponente B) besonders bevorzugt sind jedoch flächige Verstärkungsstoffe wie Matten unterschiedlicher Flächengewichte, Gewirke, Gestricke, Gewebe, non wovens, Netze, Siebe, Gitter etc. aus Glas, Carbonfasern, LC-Fasern, Polyamid-, Aramid-, Cellulose-etc-Fasern, ferner aus anorganischen Stoffen wie z.B. Carbiden, Metallen wie Aluminium, Stahl oder Kupfer.

Die Komponente B) wird bei der Durchführung des erfindungsgemäßen Verfahrens im allgemeinen in einer Menge von bis zu 80 Gew.-%, vorzugsweise von 20 bis 70 Gew.-%, bezogen auf das Gesamtgewicht des Systems eingesetzt.

Zur Durchführung des erfindungsgemäßen Verfahrens werden die Ausgangskomponenten A) und B) vorzugsweise zu einem schichtförmigen Aufbau kombiniert, der gegebenenfalls neben den erfindungswesentlichen Ausgangsmaterialien A) und B) weitere Hilfs- und Zusatzstoffe C) in einer Menge von bis zu 50 Gew.-%, bezogen auf das Gesamtgewicht des Systems enthalten kann.

Bei diesen gegebenenfalls mitzuverwendenden Hilfs- und Zusatzstoffen C) handelt es sich beispielsweise um andere thermoplastische Kunststoffe wie beispielsweise Polyethylen, Polypropylen, Polystyrol, ABS, thermoplastisches Polyurethan, Polyacrylnitril, PVC, Polyvinylacetat oder um Gemische derartiger thermoplastischer Kunststoffe. Diese thermoplastischen Kunststoffe können in Form von Folien, Matten, Granulaten, Pulvern oder in beliebig anderer Form mitverwendet werden.

Weitere, gegebenenfalls mitzuverwendende Hilfs- und Zusatzmittel C) sind beispielsweise Verarbeitungshilfsmittel, die eine Verbesserung der Haftung zwischen den einzelnen Schichten des Aufbaus bewirken. Derartige Verarbeitungshilfsmittel sind beispielsweise in der deutschen Patentanmeldung P 3 840 167.3 beschrieben.

Die Durchführung des erfindungsgemäßen Verfahrens, d.h. die durch Einwirkung von Druck und Temperatur bewirkte Verarbeitung der Polyisocyanat-Polyadditionsprodukte kann unter Verwendung beliebiger, hierfür geeigneter, bekannter Apparaturen wie beispielsweise Tiefzieh-Pressen erfolgen. Bei der Durchführung des erfindungsgemäßen Verfahrens kommt es jedoch nicht zu einem Aufschmelzen des Materials, wie es von im eigentlichen Sinne "thermoplastischen" Kunststoffen bekannt ist; eine flüssige, rel. niederviskose, makroskopische Phase wird zu keinem Zeitpunkt eingenommen. Geeignete Verfahren zur Thermoverformung werden z.B. von H. Käufer in "Maschinenmarkt" 88 (1982), Vogel-Verlag, Würzburg, Seiten 1068 bis 1071 beschrieben.

Die Durchführung des erfindungsgemäßen Verfahrens erfolgt im allgemeinen bei einem Druck von mindestens 1 bar (Normaldruck), vorzugsweise innerhalb des Druckbereichs von 10 bis 400 bar, insbesondere innerhalb des Druckbereichs von 20 bis 100 bar, bei einer Temperatur von mindestens 50°C, vorzugsweise 100 bis 220°C und insbesondere 150 bis 200°C, wobei die Verformungszeiten bei 1 Sekunde bis 10 Minuten liegen können.

Die Druck- und Temperaturbedingungen und ihre Dauer müssen so gewählt werden, daß die schaumförmigen Polyisocyanat-Polyadditionsprodukte der Komponente A) während der Druck- und Temperatureinwirkung komprimiert werden, so daß die Dichte der in den Verfahrensprodukten in komprimierter Form vorliegenden Polyisocyanat-Polyadditionspodukte mindestens 10 %, vorzugsweise mindestens 50 % über der Dichte der als Ausgangsmaterialien eingesetzten Polyisocyanat-Polyadditionsprodukte A) liegt.

Das erfindungsgemäße Verfahren gestattet die Herstellung von Halbzeug wie auch Endprodukten aus Abfallmaterialien und zur Entsorgung anstehender Altteile, die den unterschiedlichsten Verwendungszwecken zugeführt werden können. So eignen sich die erfindungsgemäßen Verbundkörper beispielsweise in Form von Hohlkörpern für Einsätze, Becher, Behälter verschiedener Abmessungen und Inhalte, als Abdeckungen für Armaturentafeln, Schaltkonsolen, Lenksäulenabdeckungen, für flächenförmige Fahrzeugkarosserieelemente wie Türblätter, Seitenteile, Kotflügel oder Motorraum- oder Kofferraumhauben, sowie zur Herstellung von Radkappen, Sitzschalen oder Rückenlehnen. In flächiger Form eignen sich die erfindungsgemäßen Verfahrensprodukte auch als Schreibunterlagen, Anzeigetafeln mit Magnethalterungen, Klebeschildern, Schutzfolien und Beschichtungen für die verschiedensten Zwecke. Die erfindungsgemäßen Verfahrensprodukte können auch in Form von Sitzschalen, Rückenlehnen, Kisten, Bechern, Schalenkoffern und ähnlichen Behältern, Konstruktionsteilen für Karosserien, Fahrgestelle, Versteifungselementen, Profilen wie z.B. Rahmen, Träger, steifen Karosserieaußenteilen wie Kotflügeln oder Motorraum- bzw. Kofferraumhauben, Radkappen, Radkastenauskleidungen, Versteifungselementen für Blenden, Kraftfahrzeug-Türinnenverkleidungen, Türen, Klappen, Decken und ähnlichen Artikeln Verwendung finden. Sie können auch mit Holz u.ä. verpreßt werden und im Innenraum von Fahrzeugen Verwendung finden. Sie eignen sich ferner für Artikel im Freizeitbereich.

Erfindungsgemäße Verfahrensprodukte können außerdem in Form von kleinen Formteilen als Tastaturelementen, hartelastische Dichtungsteile und Manschetten, Griffmulden und Griffkörper, kleinen Dämpfungselementen oder Unterleg- bzw. Distanzscheiben Verwendung finden, ferner für versteifte oder unversteifte Profile für Kabelkanäle und Dichtungslippen oder für beliebige andere, massive kleine Körper.

Beispiele

Zur Durchführung der nachfolgenden Beispiele wurde ein Folien-Schaumstoff-Verbund verwendet, der wie folgt hergestellt worden war:

Zur Hinterschäumung dienten folgende Polyurethan-Rohstoffe:

90 g eines Polyethers vom Molekulargewicht 4800, der durch Anlagerung von Propylenoxid (87 %) und Ethylenoxid (13 %) an Trimethylolpropan erhalten wurde, 2,5 g Wasser, 2 g Tallöl und 0,4 g Dimethylaminopropylformamid wurden mit 47 g eines Polyphenylpolymethylen-polyisocyanats, das durch Phosgenierung eines Anilin-Formaldehyd-Kondensates erhalten wurde und einen NCO-Gehalt von 31 Gew.-% aufweist, vermischt und in die Form eingetragen.

Verfahrensweise

Eine nicht eingefärbte, handelsübliche, ca. 0,7 mm dicke PVC-Folie wird in ein temperierbares Plattenmetallwerkzeug der Größe 20 x 20 x 4 cm eingelegt und rückseitig maschinell mit der oben angegebenen Rohstoffmischung hinterfüllt. Nach einer Reaktions- und Aushärtezeit von 5 Minuten wird entformt.

Die erhaltenen Formteile werden bei 120°C im Umlufttrockenschrank separat getempert, die Dichte des Hinterfüllschaums beträgt ca. 0,45 g/cm$^3$.

Das so hergestellte Verbundmaterial wurde nach einer Vorzerkleinerung auf ca. 3 cm bis 5 cm große Stücke in einem Schneidmühle PS 4-5 (Fa. Pallmann, Zweibrücken, BRD) auf die Korngröße von ca. 4 mm zerkleinert.

Dieses Granulat dient als Ausgangsmaterial für die folgenden Beispiele.

Beispiel 1

Das Granulat wurde in einem Trockenschrank bei 180°C für 10 Minuten vorgewärmt und danach zusammen mit einer Endlosglasmatte U 816 (Fa. Gevetex, Herzogenrath, BRD) in das auf 195°C vorgewärmte, in der Presse befindliche Tauchkantenwerkzeug (Preßform zur Herstellung einer Preßplatte der Abmessung 60 x 120 mm und einer mit dem Einfüllgrad varierbaren Dicke von 0,5 bis 5 mm; Material Messing mit einem Messingstempel) eingefüllt. Das Gewicht der Glasmatte betrug 60 % des Gesamtgewichtes des in die Preßform eingefüllten Materials.

Nach Befüllen wurde die Presse (Modell Polystat 200 T der Fa. Schwabenthan, Berlin) zugefahren und mit 80 bar Preßdruck beaufschlagt. Nach zwei Minuten Preßzeit wurde unter Druck im Zeitraum von 5 Minuten bis auf RT abgekühlt und die Platte der Dicke 3 mm entnommen. Die erzielte Dicke von 3 mm entsprach einer irreversiblen Kompression des in die Presse eingefüllten Schaumstoffs auf die doppelte Dichte (0,9 g/cm$^3$).

Die Platte zeigte eine Entmischung der PVC-PUR-Fraktionen, die jedoch keinen Einfluß auf die mechanischen Eigenschaften der Platte hat.

Zugstäbe aus dieser Platte zeigten nach DIN 53 504 eine Reißdehnung von 3 % und eine Zugfestigkeit von 14 MPa.

Beispiel 2

Wie Beispiel 1, jedoch unter Verwendung eines Drahtgewebes der Maschenweite 0,1 mm in einer Menge von 60 Gew.-%, bezogen auf das Gesamtgewicht des in die Presse eingefüllten Materials.

Es resultiert eine Preßplatte der Dicke 1,2 mm, die sich wie eine Metallplatte bei Raumtemperatur mit bleibender Verformung biegen läßt. Die genannte Dicke entspricht einer Kompression des eingefüllten Schaummaterials von auf die doppelte Dichte (0,9 g/cm$^3$).

Beispiel 3

Wie Beispiel 2, jedoch unter Verwendung eines Drahtgewebes der Maschenweite 0,3 mm. Das Ergebnis entspricht weitgehend dem Ergebnis gemäß Beispiel 2.

Beispiel 4

Auf eine auf 170°C vorgewärmte Preßplatte wird das im Beispiel 1 eingesetzte Granulat zusammen mit einer Endlosglasmatte U 816 und einem aufgelegten Edelholzfurnier zu einem 4-schichtigen Aufbau (PVC/PUR-Endlosglasmatte-PVC/-PUR-Holzfurnier) vereinigt.

Das Granulat wurde nicht vorgewärmt auf die auf 170°C vorgewärmten Preßplatten gegeben, und mit der Endlosmatte überlegt; auf die Matte wurde erneut Granulat gegeben und obenauf das Holzfurnier gelegt. Danach wurde die Presse langsam zugefahren und das Material zwischen den Platten mit 100 bar Druck beaufschlagt. Nach zwei Munuten wurde das Material unter Druck in einem Zeitraum von 4 Minuten bis RT abgekühlt und das Laminat entnommen. Der Gewichtsanteil der Endlosmatte lag bei 50 %, bezogen auf das Gesamtgewicht des Laminats. Die Menge des eingesetzten Granulats entsprach 45 % des Gesamtgewichts. Die bei der Herstellung des Laminats eingetretene Kompression des Schaumstoffs entsprach einer Verdichtung des Schaummaterials auf die doppelte Dichte (0,9 g/cm$^3$).

Beispiel 5

In einem Tauchkantenwerkzeug (Werkzeug zur Herstellung von Preßplatten der Größe 190 x 190 mm) wurden in einem dem Beispiel 1 analogen Vorgang auf einer Presse (Polystat 400 der Fa.

Schwabenthan, Berlin, BRD) Platten mit Endlosglasmatten als Verstärkung hergestellt. Dabei wurden drei Endlosglasmatten in die Form gelegt und soviel Granulat eingefüllt, daß der Glasgehalt der hergestellten Platten 70 Gew.-% betrug.

Die Preßtemperaturen betrugen 198°C, der Preßdruck 180 bar im Formteil und die Verweilzeit des Materials in der Presse wurde von 10 bis 20 Minuten variiert; die Preßplatten wurden heiß entformt. Auf diese Weise wurden sechs Platten hergestellt.

Beispiel 6

Die Platten aus Beispiel 5 wurden in einem weiteren, separaten Schritt über ein Tiefziehverfahren zu pyramidenförmigen Formteilen umgeformt.

Dazu wurden die Halbzeugplatten aus Beispiel 5 für die Dauer von 10 Minuten bei 180°C im Trockenschrank vorgewärmt und dann in die auf 194°C vorgeheizte Preßform (asymetrische Pyramidenform der Höhe 4 cm, mit einer quadratischen Basis der Basisbreite 9,5 cm, Material Messing) eingelegt. Dann wurde die Presse langsam zugefahren und nach dem Zufahren das Formteil mit einem Druck von 80 bar beaufschlagt. Nach einer Standzeit von 2 Minuten wurde das Formteil unter Druck bis auf RT abgekühlt und der Form entnommen.

**Patentansprüche**

1.  Verfahren zur Herstellung von Formkörpern oder Folien, dadurch gekennzeichnet, daß man Kombinationen aus
    A) einer Komponente A) bestehend aus
    A1) in zerkleinerter Form vorliegenden, geschäumten Polyisocyanat-Polyadditionsprodukten einer Dichte von 0,1 bis 1,2 $g/cm^3$, die durch Umsetzung von
    a) organischen Polyisocyanaten

    mit
    b) Verbindungen mit einem Molekulargewicht von 1.800 bis 12.000, welche im statistischen Mittel mindestens 2,5, gegenüber Isocyanatgruppen reaktionsfähige Gruppen aufweisen

    und gegebenenfalls
    c) Diaminen mit zwei primären und/oder sekundären aromatisch gebundenen Aminogruppen des Molekulargewichtsbereichs 108 bis 400

    und/oder gegebenenfalls
    d) Ethergruppen aufweisenden (Cyclo)-Alkandiolen und/oder (Cyclo)-

Alkanpolyaminen des Molekulargewichtsbereichs 60 bis 1.799

    unter Mitverwendung von
    e) Treibmitteln, sowie gegebenenfalls weiteren aus der Polyurethanchemie an sich bekannten Hilfs- und Zusatzmitteln

    unter Einhaltung einer Isocyanatkennzahl von 62 bis 200 im Ein- oder Mehrstufenverfahren hergestellt worden sind,

    oder aus
    A2) in zerkleinerter Form vorliegenden Kombinationen aus derartigen geschäumten Polyisocyanat-Polyadditionsprodukten mit Folienmaterial, wie sie durch Hinterschäumen einer Folie zu einem Schaumstoff-Folienverbund erhalten werden

    wobei die Komponente A) in einer Menge von mindestens 20 Gew.-%, bezogen auf das Gesamtgewicht des Systems, vorliegt

    und
    B) Verstärkungsstoffen in einer Menge von bis zu 80 Gew.-%, bezogen auf das Gesamtgewicht des Systems,

    und gegebenenfalls
    C) weiteren Hilfs- und Zusatzstoffen in einer Menge von bis zu 50 Gew.-%, bezogen auf das Gesamtgewicht des Systems

    unter erhöhten Temperatur- und Druckbedingungen unter irreversibler Erhöhung der Dichte der geschäumten Polyisocyanat-Polyadditionsprodukte einer thermoplastischen Formgebung unterwirft.

2.  Verfahren gemäß Anspruch 1, dadurch gekennzeichnet, daß die Polyisocyanat-Polyadditionsprodukte der Komponente A) eine Dichte von 0,1 - 0,75 $g/cm^3$ aufweisen.

3.  Verfahren gemäß Anspruch 1 und 2, dadurch gekennzeichnet, daß die geschäumten Polyisocyanat-Polyadditionsprodukte und das gegebenenfalls mit diesen in Kombination vorliegende Folienmaterial in Form von Granulaten, Schnipseln, Flocken und/oder anderen Klein- und Kleinstteilen vorliegen, bevor sie mit der Komponente B) zu der der thermoplastischen Formgebung zuzuführenden Kombination vereinigt werden.

4.  Gemäß Anspruch 1 bis 3 erhaltene Formkörper und Folien.